# EUROPÄISCHE PATENTSCHRIFT

(11) **EP 1 844 916 B1**
(45) Veröffentlichungstag und Bekanntmachung des Hinweises auf die Patenterteilung: **25.06.2014**
(21) Anmeldenummer: 07006626.1
(22) Anmeldetag: 30.03.2007
(51) Int. Cl.: B29C 45/46, B29C 45/27, B29C 45/57

(54) **Einrichtung zum Expansionsspritzgiessen**
Device for expansion injection moulding
Dispositif destiné au moulage par injection expansion

(30) Priorität: 12.04.2006 AT 6342006
(43) Veröffentlichungstag der Anmeldung: 17.10.2007
(73) Patentinhaber: ENGEL AUSTRIA GmbH, 4311 Schwertberg (AT)
(72) Erfinder: Steinbichler, Georg, 8786 Rottenmann (AT)
(74) Vertreter: Hofinger, Stephan

(56) Entgegenhaltungen:
- AT-A4- 500 870
- DE-A1- 10 009 827
- GB-A- 882 574
- GB-A- 2 251 201
- US-A- 2 912 719
- US-A- 3 052 925
- STEINBICHLER G ET AL: "REKORDVERDAECHTIG DUENN AMAZINGLY THIN" KUNSTSTOFFE, PLAST EUROPE, HANSER, MUENCHEN, DE, Bd. 94, Nr. 12, 2004, Seiten 126-134, XP008041577 ISSN: 0945-0084

## Beschreibung

Die vorliegende Erfindung betrifft eine Einrichtung zum Expansionsspritzgießen mit der von einer Hauptdruckquelle unter Druck gesetzte Kunststoffschmelze aus einem Speicherraum mit absperrbarem Ausgang in einen Formhohlraum durch Expansion der unter Druck gespeicherten Kunststoffschmelze, gegebenenfalls unterstützt durch elastische Verformung der Wandung des Speicherraums und/oder der Wandung eines zum Speicherraum führenden Kanals, einspritzbar ist.

Grundgedanke der Expansionsspritzgießtechnik ist es, die Energie für die Überwindung des Füllwiderstandes bei der Kavitätenfüllung durch Verdichtung der Schmelze bereitzustellen. Dabei wird die Kompressibilität der Kunststoffschmelze ausgenutzt. Durch die benötigten hohen Drücke im Bereich zwischen 1.000 bar und 3.000 bar kommt es zwa gsläufig in gewissem Umfang auch zu einer elastische VerformungderWandung des Speicherraums und/oder der Wandung eines zum Speicherraum führenden Kanals. Nach Öffnen des absperrbaren Ausgangs unterstützt die Wandung dadurch, wenn auch in der Regel nur in sehr geringem Umfang, das Einspritzen der Kunststoffschmelze in den Formhohlraum. Um genügend Druck bzw. Energie im Kunststoff speichern zu können, muss neben einem entsprechend hohen Verdichtungsdruck vorgesehen sein, dass das Volumen des Speicherraums ein Vielfaches des Formhohlraumvolumens beträgt. Dies hat den Nachteil, dass nur ein Bruchteil der im Speicherraum vor einem Einspritzvorgang unter Druck gesetzten Kunststoffschmelze tatsächlich in den Formhohlraum eingespritzt wird und der Rest mehrere Zyklen im Speicherraum verweilt. Dies führt in der Regel zu einer mehr oder weniger starken thermischen und druckbedingten Schädigung der Kunststoffschmelze schon bevor sie in den Formhohlraum eingespritzt wird. Dabei ist zu bedenken, dass nach der Öffnung des Verschlussmechanismus nicht nur die Kavität, also der Formhohlraum, mit der expandierenden Kunststoffschmelze volumetrisch gefüllt werden muss.

Das Dokument XP 008041577 beschreibt eine Einrichtung zum Expansionsspritzgießen, wobei der Speicherraum möglichst nahe an die Werkzeugkavität herangeführt werden soll.

Aufgabe der Erfindung ist es, sicherzustellen, dass nach erfolgtem Druckausgleich ein ausreichender Restdruck vorhanden ist, der eine Nachdruckfunktion für den Schwingungsausgleich der abkühlenden Schmelze übernimmt.

Dies wird erfindungsgemäß durch eine Einrichtung zur Expansionsspritzgießen mit den Merkmalen des Anspruchs 1 erreicht.

Durch diese erfindungsgemäße Maßnahme kann mit wesentlich geringeren Volumina an Kunststoffschmelze im Speicherraum gearbeitet werden. Es ist nicht mehr notwendig, wie beim Stand der Technik im Wesentlichen die gesamte für die vollständige Füllung des Formhohlraums notwendige Energie in der Kunststoffschmelze zu speichern. Durch den zusätzlichen Druckspeicher oder die zusätzliche Druckquelle kann vielmehr passiv (Druckspeicher) oder aktiv (Druckquelle) zusätzlicher Druck zum Einspritzen der Kunststoffschmelze auf diese ausgeübt werden. Durch die Anordnung des Speicherraums in der Form werden die Fließwiderstände zwischen Speicherraum und Formhohlraum auf ein Minimum verringert, sodass auch mit niedrigeren Drücken gearbeitet werden kann.

Die erfindungsgemäßen Druckspeicher sind in der Regel so ausgebildet und mit dem Speicherraum verbunden, dass sie vorzugsweise ausschließlich von der Hauptdruckquelle Ober die Kunststoffschmelze aufladbarsind. Als Hauptdruckquellenfungierendabei die beim Stand der Technik bekannten Einspritzkolben oder Schnecken, die durch einen entsprechenden Vorschub im Plastifizierzylinder die Kunststoffschmelze aus diesem über ein an sich bekanntes Heißkanalsystem in den Speicherraum befördern und dort unter Druck setzen. Bei den passiven Druckspeichem wird somit durch die Plastifizierschnecke oder den Einspritzkolben nicht nur die Kunststoffschmelze, sondern auch der zusätzliche Druckspeicher mit Energie bzw. Druck aufgeladen. Alternativ oder ergänzend zum passiven Druckspeicher kann aber auch eine zusätzliche Druckquelle vorgesehen sein. Diese ist in der Regel so ausgebildet, dass die Kunststoffschmelze im Speicherraum und/oder im Kanal durch sie zusätzlich zur Hauptdruckquelle mit Druck beaufschlagbar ist. Bei der zusätzlichen Druckquelle handelt es sich somit um ein aktives zusätzliches Element.

Zusätzlicher Druckspeicher wie auch zusätzliche Druckquelle können im Speicherraum und/oder in einem zum Speicherraum führenden Kanal und/oderanstelle zumindest eines Teils der Wandung des Speicherraums und/oder anstelle zumindest eines Teils derWandung des zum Speicherraum führenden Kanals angeordnet bzw. ausgebildet sein. Sie können elastisch deformierbare Festkörper oder Fluidspeicher oder Kombinationen daraus aufweisen. Bei zuletzt genannter Kombination wird sowohl durch die elastische Verformung des Festkörpers als auch durch die elastische Deformation des Fluidspeichers der zusätzliche Druck auf den Kunststoff ausgeübt. Als zusätzliche Druckspeicher können zB mechanische Federsysteme, zB in Form von federbelasteten Kolben oder federbelasteten Hülsen oder in sich federnden Hülsen, vorgesehen sein. In der Ausgestaltungsform als hydromechanische oder pneumatisch-mechanische Federsysteme kann es sich zB um fluidbelastete Kolben oder fluidbelastete dehnbare Hülsen handeln. Bei reinen Fluidspeichern oder Fluidquellen oder deren Verwendung in der genannten Kombination können diese mit Gas oder Flüssigkeit gefüllt sein. Die zusätzliche Druckquelle kann aber auch einen hydraulisch oder pneumatisch oder elektrisch betätigbaren Kolben oder eine hydraulisch oder pneumatisch deformierbare Membran bzw. Wandung aufweisen.

Um sicherzustellen, dass bei der Expansion der Kunststoffschmelze diese in Richtung des Formhohlraums und nicht entgegengesetzt in Richtung der in den Speicherraum führenden Kanäle wirkt, kann es ausreichen vorzusehen, dass der Fließwiderstand im Verbindungsbereich von Speicherraum und Formhohlraum wesentlich geringer ist als der in dem vor dem Speicherraum liegenden Kanal(system). Um alternativ oder ergänzend aber sicherzustellen, dass möglichst die gesamte Energie bei der Expansion der Kunststoffschmelze zur Füllung des Formhohlraums eingesetzt wird, kann auch ein weiteres Absperrelement am Eingang des Speicherraums oder in einem zum Speicherraum führenden Kanal, vorzugsweise an dessen Eingang in die Form, vorgesehen sein.

Weitere Einzelheiten und Merkmale der vorliegenden Erfindung ergeben sich aus der nachfolgenden Figurenbeschreibung. Dabei zeigen:
- Die Fig. 1 und 2: ein erstes erfindungsgemäßes Ausführungsbeispiel,
- die Fig. 3: ein zweites erfindungsgemäßes Ausführungsbeispiel,
- die Fig. 4 und 5: ein drittes erfindungsgemäßes Ausführungsbeispiel und
- die Fig. 6: ein viertes erfindungsgemäßes Ausführungsbeispiel.

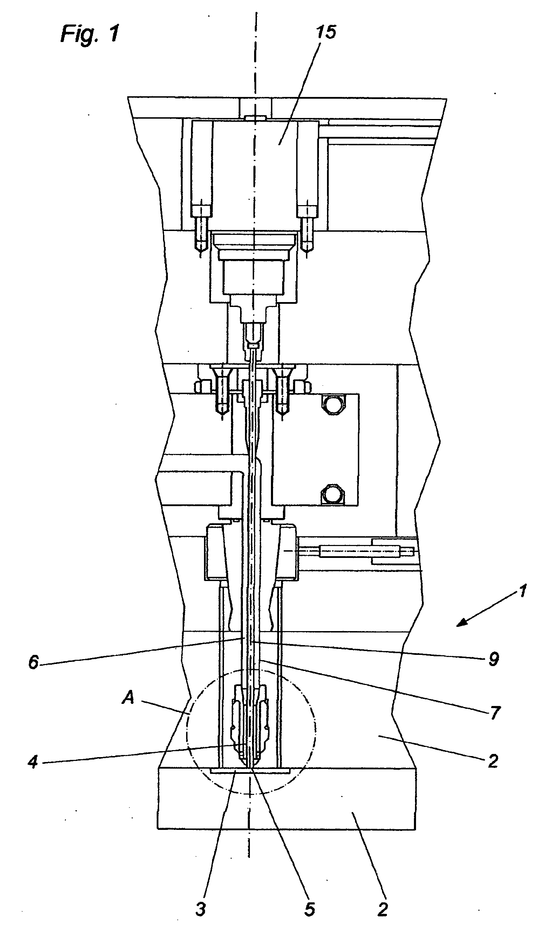

Fig. 1 zeigt einen Ausschnitt einer Formaufspannplatte mit einer daran befestigten, efindungsgemäß ausgebildeten Form 1. Die in einem beim Stand der Technik bekannten aber hier nicht dargestellten Plastifizierzylinder einer Spritzgießeinrichtung zum Beispiel von einer Schnecke plastifizierte Kunststoffschmelze wird über eine beim Stand der Technik ebenfalls bekannte am Ausgang des Plastifizierzylinders angeordnete Absperrung in ein ebenfalls bekanntes Heißkanalverteilersystem eingepresst. Die Plastifizerschnecke dient dabei durch ihren Vorschub im Plastifizierzylinder als Hauptdruckquelle, welche das plastifizierte Material unter Druck in das Heißkanalsystem und damit auch in den hier dargestellten Kanal 6 fördert. Der Kanal 6 mündet in den Speicherraum 4, welcher möglichst nahe am Formhohlraum 3 direkt in einer der beiden Formhälften 2 der Spritzgussform 1 angeordnet ist. Als Absperrung des formhohlraumseitigen Ausgangs 5 des Speicherraums 4 dient die Verschlussnadel 9. Zu deren Betätigung ist ein an sich bekannter Antrieb 15 vorgesehen. Dieser kann zB als Hydraulik- oder Pneumatikzylinder oder elektrisch zB als ein Schrittmotor ausgebildet sein. Durch eine Steuerung oder Regelung der Öffnungsbewegung der Verschlussnadel 9 und dem sich daraus als Funktion der Zeit ergebenden Spalt im Ausgang 5 und dem damit verbundenen Druckverlust in der fließenden/ expandierenden Kunststoffschmelze, kann die Fließfrontgeschwindigkeit für die Füllung des Formhohlraums 3 beeinflusst werden. Für eine solche Stellbewegung der Verschlussnadel 9 bieten sich vorzugsweise elektrische Schrittmotoren an. Es kann zum Beispiel vorgesehen sein, dass sie eine Kontrolleinrichtung aufweist, die dazu vorgesehen ist, den absperrbaren Ausgang in den Formhohlraum in Abhängigkeit eines vorgebbaren Volumen-Strom-Profils gesteuert und/oder geregelt zu öffnen und/oder zu schließen. Das Volumen Strom-Profil wird dabei zum Beispiel in Abhängigkeit der jeweiligen Ausgestaltung des Formhohlraums vorgegeben. Es führt in der Regel zu einem gezielt verzögerten Füllen des Formhohlraums. Bei einer Steuerung können dabei fix vorgebbare Verläufe des Öffnungsgrades des Ausgangs 5 realisiert werden. Diese können Abfolgen von vollständigem, teilweisem und/oder intermittierendem Öffnen des Ausgangs 5 umfassen. Bei der Ausgestaltung in Form einer Regelung wird zusätzlich noch zumindest ein gemessener Istwert, zum Beispiel des aktuellen Drucks im Formhohlraum 3 und/oder im Speicherraum, zur Bestimmung des Volumen-Strom-Profils bzw. -Verlaufes herangezogen.

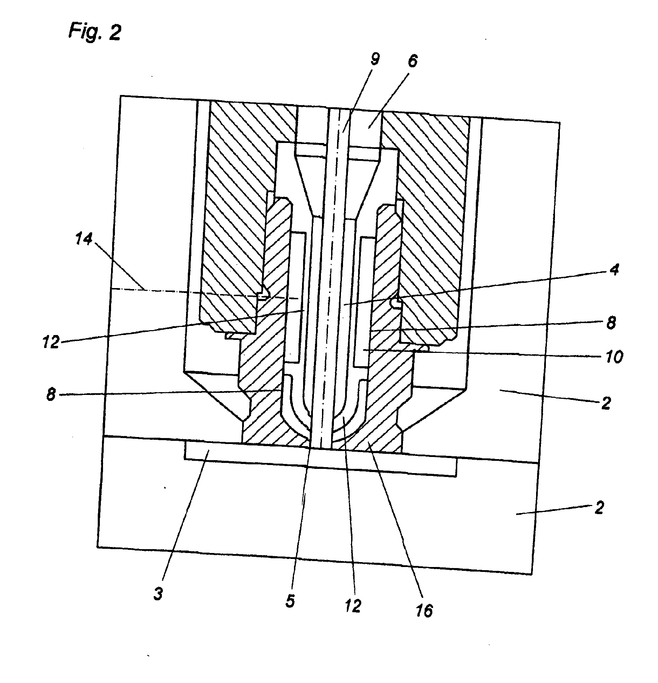

Beim konventionellen Expansionsspritzguss ist es, wie eingangs geschildert, notwendig, sehr große Volumina im Speicherraum 4 vorzusehen, damit ausreichend Druck bzw. Energie gespeichert werden kann. Um die bereits geschilderten Nachteile hieraus zu vermeiden, ist bei dem in Fig. 1 dargestellten erfindungsgemäßen Ausführungsbeispiel ein zusätzlicher Druckspeicher im Speicherraum 4 angeordnet. Dieser ist besonders gut in Fig. 2 zu sehen, die die wesentlichen Teile des Ausschnitts A aus Fig. 1 zeigt. In diesem Ausführungsbeispiel ist der zusätzliche Druckspeicher in Form einer elastisch federnden Hülse 12 ausgebildet. Diese wird beim Einpressen der Kunststoffschmelze in den Speicherraum 4 vorgespannt und speichert dadurch einen Teil des für die spätere Füllung des Formhohlraums 3 benötigten Drucks. Dadurch wird erreicht, dass nicht mehr die gesamte Energie bzw. der gesamte Druck, welcher zur Füllung des Formhohlraums 3 nötig ist, durch Kompression der Kunststoffschmelze im System gespeichert werden muss. Hierdurch kann auch das gesamte Innenvolumen des von der Wandung 8 umgebenen Speicherraums 4 wesentlich kleiner dimensioniert werden, sodass die Kunststoffschmelze, sobald sie einmal in den Speicherraum 4 gelangt, auch sehr rasch in den Formhohlraum 3 eingespritzt wird. Hierdurch ist vermieden, dass durch lange Verweilzeiten der Kunststoffschmelze im Speicherraum 4 diese durch mehrfaches Komprimieren und Expandieren schon vor dem Einspritzen in den Formhohlraum 3 geschädigt wird.

Das im konkreten Fall benötigte Kompressionsvolumen im Speicherraum 4 kann ausgehend vom Volumen des zu füllenden Formhohlraums 3, dessen Füllwiderstand (Fließweg/Wanddickenverhältnis), der Viskosität der verwendeten Kunststoffschmelze und den Verarbeitungsbedingungen sowie dem gewünschten Restdruck nach erfolgter Expansion errechnet bzw. abgeschätzt werden.

Die in sich federnde Dehnhülse 12 kann zunächst einmal in Form eines zusätzlichen Druckspeichers passiv ausgebildet sein. Das heißt, sie wird über die Kunststoffschmelze von der Hauptdruckwelle vorgespannt. In einem einfachen Ausführungsbeispiel kann die Druckspeicherung rein auf den elastischen Festkörpereigenschaften der Hülse 12 an sich basieren. Die Hülse 12 kann aber auch als hydromechanischesoder pneumatischmechanisches Federsystem ausgebildet sein, indem die Fluideinschlüsse 10 ebenfalls Druck speichem. Diese können sowohl mit Gas als auch mit geeigneten Flüssigkeiten gefüllt sein und in Wechselwirkung mit den elastischen Festkörpereigenschaften der Hülse als zusätzlicher Druckspeicher dienen.

Um diese an sich passive Form eines zusätzlichen Druckspeichers als aktive zusätzliche Druckquelle im Sinne der Erfindung auszubilden, kann über eine, durch die hier strichliert dargestellte Linie angedeutete, Leitung 14 Fluid von außen von einer zusätzlichen hier nicht dargestellten Quelle in die Fluidspeicher 10 eingepresst werden. In diesem Fall einer aktiven Druckquelle wird die Vorspannung der Dehnhülse 12 dann also nicht mehrvorrangig über die Hauptdruckquelle unddie Kunststoffschmelze, sondern über das Fluid in der Speiseleitung 14 hervorgerufen. Als zusätzliche Quelle können an sich bekannte Fluidpumpen, hydraulische oder pneumatische Zylinder oder dergleichen mit der Zuleitung 14 in Verbindung stehen. Die Dehnhülse 12 kann, um sie als aktive zusätzliche Spannungsquelle auszubilden, aber auch durch einen elektrischen oder elektromechanischen oder magnetischen oder piezoelektrischen Aktuator vorgespannt oder bewegt werden. Die Dehnhülse 12 wird grundsätzlich so dimensioniert, dass sie unter Druckbeanspruchung durch den Schmelzeverdichtungsdruck oder durch den zusätzlichen Druck über den Fluidspeicher 10 nicht bricht, aber eine maximale elastische Verformung zur Energiespeicherung zusätzlich zur verdichteten Kunststoffschmelze ermöglicht. Vorteil dieser Variante ist vor allem, dass keine beweglichen Elemente, zB Kolben, deren Betätigung zumeist reibungsabhängig ist, erforderlich sind.

Die Wandung 8 des Speicherraums 4 kann, wie hier dargestellt, als ein Einschraubteil 16 ausgebildet sein.

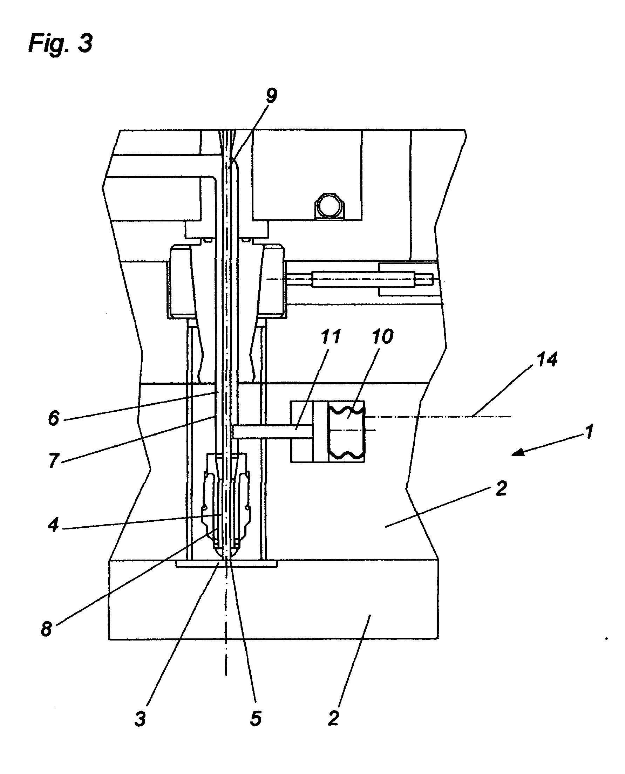

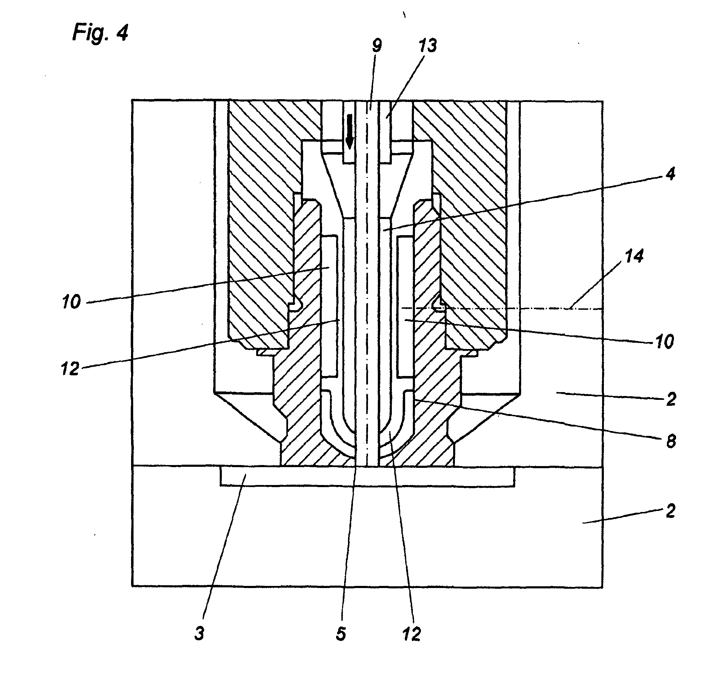

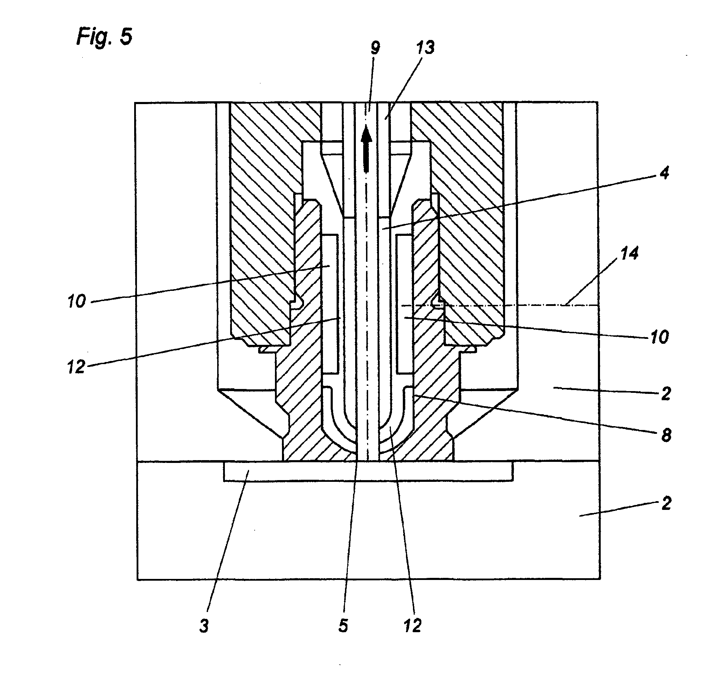

Fig. 3 zeigt eine andere erfindungsgemäße Ausbildungsform eines zusätzlichen Druckspeichers. Dieser weist einen in den Kanal 6 reichenden Kolben 11 auf. Der Kolben 11 ist in einem Zylinder geführt und wirkt auf einen Fluiddruckspeicher 10, der ebenfalls mit elastisch deformierbarem Gas oder einer entsprechenden Flüssigkeit, wie zB Thermoöl, gefüllt sein kann. Der Kolben 11 kann in Abweichung vom hier dargestellten Ausführungsbeispiel auch direkt in den Speicherraum 4 münden. Dies ist besonders dann vorzusehen, wenn ein weiteres Absperrelement 13 gemäß der weiter unten erläuterten Fig. 4 und 5 vorgesehen ist. Bei Weglassen der gestrichelt dargestellten Speiseleitung 14 für den Fluidspeicher 10 liegt wiederum ein zusätzlicher passiver Druckspeicher vor, der über die komprimierte Schmelze im Kanal 6 (bzw. im Speicherraum 4) mit Druck beaufschlagt wird. In dieser Ausgestaltungsform kann der Fluidspeicher 10 auch durch elastisch deformierbare Festkörper, wie Schraubenfedern, Elastomerpakete oder dergleichen, ersetzt werden. Es ist aber auch möglich, den Kolben 11 als aktives Element und damit die Kolbenzylinderanordnung als zusätzliche Druckquelle auszubilden. Bei einem Fluidspeicher 10 kann dies wiederum durch eine Speiseleitung 14 mit dahinter angeordneter, hier nicht dargestellter zusätzlicher Druckquelle realisiert werden. Alternativ ist es aber auch möglich, elektrische Schrittmotoren oder Magnetspulen oder piezoelektrische Aktuatoren oder dergleichen vorzusehen, die den Kolben 11 als zusätzliche Druckquelle vorspannen bzw. verschieben können.

Bei den bisher gezeigten Ausführungsbeispielen ist der Speicherraum in Richtung der Kanäle 6 offen und nur in Richtung des Formhohlraums 3 an seinem Ausgang 5 über die Verschlussnadel 9 absperrbar. Dies funktioniert, solange der Fließwiderstand im Kanal 6 deutlich größer als auf dem Weg vom Speicherraum 4 in den Formhohlraum ist.

Alternativ oder ergänzend kann aber auch ein weiteres Absperrelement 13 am Eingang des Speicherraums 4 (wie in den Fig. 4 und 5 dargestellt) oder in dem zum Speicherraum 4 führenden Kanal 6, z.B. an dessen Eingang in die Form, vorgesehen sein. Im dargestellten Ausführungsbeispiel ist das weitere Absperrelement 13 in Form einer entlang der Verschlussnadel 9 über einen eigenen, hier nicht dargestellten Antrieb verschiebbare Hülse ausgeführt, welche dazu geeignet ist, den Speicherraum 4 gegenüber dem Kanal 6 abzusperren. Fig. 4 zeigt die Stellung, bei der Kunststoffschmelze in den Speicherraum 4 eingebracht werden kann. Fig. 5 zeigt den abgesperrten Zustand, wie er beim Einspritzen der Kunststoffschmelze in den Formhohlraum 3 ist. Dieses weitere Absperrelement 13 sorgt im geschlossenen Zustand gemäß Fig. 5 für eine praktisch 100%ige Druckentkopplung zwischen Speicherraum 4 und Kanal 6. Hierdurch wird zum Einen optimal sichergestellt, dass nach Öffnen der Absperrnadel 9 die Expansion der Kunststoffschmelze, unterstützt durch die Druckentlastung des zusätzlichen Druckspeichers oder durch die zusätzliche Druckquelle, vollständig für die Füllung des Formhohlraums 3 zur Verfügung steht. Darüber hinaus hat diese Absperrung den Vorteil, dass die im Kanal 6 vorhandene Kunststoffschmelze nicht druckentlastet wird und damit auch nicht expandiert, sondern im komprimierten Zustand verbleibt, wodurch ein mehrfaches Komprimieren und Expandieren der Schmelze vor dem Einspritzen in den Formhohlraum 3 weiter unterbunden ist. Darüber hinaus wird erreicht, dass die Schmelzeexpansion aus einem Verdichtungsraum (Speicherraum) mit definiertem Volumen heraus erfolgt, womit die Voraussetzung für eine hochpräzise Füllung des Formhohlraums 3 weiter verbessert sind. Eine weitere kanalseitige Absperrung 13 hat, wie auch eine entsprechende hier nicht dargestellte Absperrung des Plastifizierzylinders, darüber hinaus aber auch den Vorteil, dass die Schnecke im Plastifizierzylinder nach dem Schließen der jeweiligen Absperrung bereits während des eigentlichen Einspritzvorganges wieder mit der Plastifizierung von neuer Kunststoffschmelze beginnen kann. Hierdurch werden die Zykluszeiten zwischen zwei Einspritzvorgängen herabgesetzt.

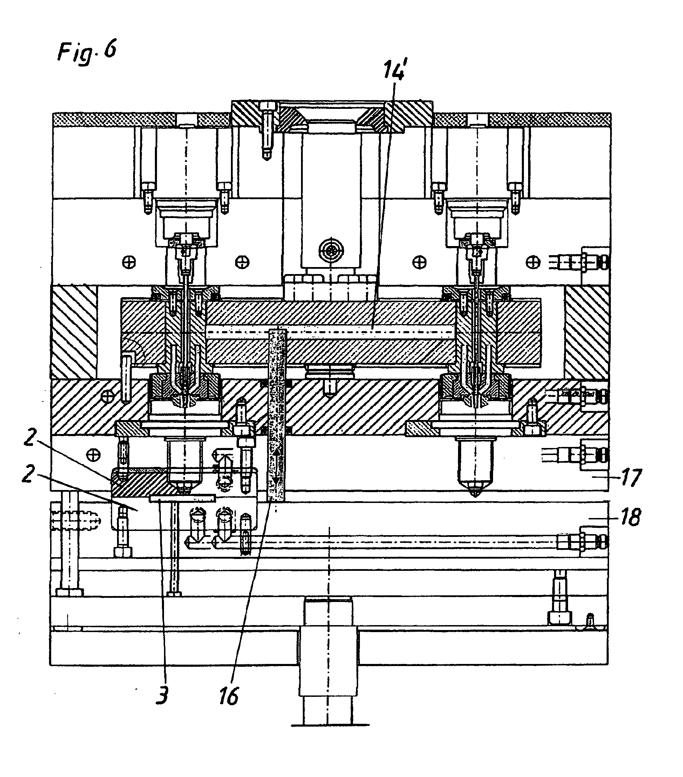

Fig. 6 zeigt schematisch eine erfindungsgemäße Variante, wie eine zusätzliche Druckquelle schließkraftbetätigt vorgespannt werden kann. Beim Schließen der Form 1 und beim Aufbringen der Schließkraftwerden die Formhälften 2, wie an sich bekannt, mittels der Formaufspannplatten 17 und 18 aneinander gepresst. Dabei wird in diesem Ausführungsbeispiel gleichzeitig der Zusatzkolben 16, welcher in der Formaufspannplatte 17 verschiebbar gelagert ist, von der anderen Formaufspannplatte 18 in die mit Hydraulikfluid gefüllte Versorgungsleitung 14' gepresst, wodurch das Hydraulikfluid verdrängt wird. Die Versorgungsleitung 14' kann wiederum mit den Versorgungsleitungen 14 gemäß der Fig. 3 und 4 in Verbindung stehen, womit über das Verschieben bzw. Schließen der Formaufspannplatten 17, 18 die entsprechenden zusätzlichen Druckquellen vorgespannt werden.

Ein Verfahren zum Betrieb der erfindungsgemäßen Einrichtung kann je nach Ausführungsbeispiel verschieden ausgebildet sein. Bei passiven zusätzlichen Druckspeichern ist jedenfalls vorgesehen, dass zunächst einmal von der Hauptdruckquelle, also in der Regel der Schnecke im Plastifizierzylinder, Kunststoffschmelze über den Kanal 6 in den Speicherraum 4 eingepresst wird. Dabei wird sowohl Druck bzw. Energie durch Komprimierung in der Schmelze selbst gespeichert, als auch der zusätzliche Druckspeicher vorgespannt. Sobald der vorab bestimmte Vorspanndruck erreicht ist, wird die gegebenenfalls vorhandene weitere Absperrung 13, wie auch eine gegebenenfalls vorhandene Absperrung am Plastifizierzylinder geschlossen. Die Schnecke kann ab diesem Zeitpunkt mit der Aufbereitung für Kunststoffschmelze für den nächsten Einspritzvorgang bereits beginnen. Bei den bisher genannten Schritten ist die Absperrung des Ausgangs 5 zwischen Speicherraum 4 und Formhohlraum 3 geschlossen. Diese wird erst geöffnet, wenn der Vorspanndruck erreicht und die gegebenenfalls vorhandene weitere Absperrung 13 geschlossen ist, sodass dann der Formhohlraum 3 durch Expansion der Kunststoffschmelze und Druckentlastung des zusätzlichen Druckspeichers gefüllt wird. Der Vorspanndruck ist dabei in der Regel so dimensioniert, dass auch noch der vorab bestimmte Nachdruck nach dem Füllen des Formhohlraums 3 zur Verfügung steht.

Ist der passive zusätzliche Druckspeicher durch eine aktive zusätzliche Druckquelle ersetzt, so kann diese entweder während des Druckaufbaus in der Schmelze oder erst nach Verschließen der weiteren Absperrung 13 den zusätzlichen Druckaufbau durchführen. Die sonstigen Verfahrensschritte sind dieselben wie bei der Verwendung von zusätzlichen Druckspeichern. Die aktiven zusätzlichen Druckquellen oder Druckspeicher können darüber hinaus auch als Aktuator für die Bereitstellung eines nach dem Einspritzen aufrechtzuerhaltenden Nachdrucks verwendet werden.

Die Erfindung ist insbesondere nicht auf Einrichtungen mit nur einem Formhohlraum 3 in der Form 1 beschränkt. Es kann vielmehr auch vorgesehen sein, dass in der Form mehrere Formhohlräume angeordnet sind, denen mehrere Speicherräume zugeordnet sind, wobei die, vorzugsweise als Nadelverschlüsse ausgebildeten, Absperrungen der Speicherräume eine gemeinsame Betätigungseinrichtung aufweisen. Entsprechend können auch in der Form 1 zusätzlich mehrere Druckspeicher oder zusätzliche Druckquellen z.B. in Form von Kolben 11 vorgesehen sein. Als zusätzliche Energiespeicher können grundsätzlich verschiedenste Formen von elastisch deformierbaren Heißkanal- oder Maschinenkomponenten dienen. So können auch Teile der Wandung 8 des Speicherraums 4 oder Teile der Wandung 7 des Kanals 6 durch entsprechend elastisch deformierbare zusätzliche Druckspeicher ersetzt werden.

## Patentansprüche

1. Einrichtung zum Expansionsspritzgießen mit der von einer Hauptdruckquelle unter Druck gesetzte Kunststoffschmelze aus einem Speicherraum mit absperrbarem Ausgang in einen Formhohlraum durch Expansion der unter Druck gespeicherten Kunststoffschmelze, gegebenenfalls unterstützt durch elastische Verformung der Wandung des Speicherraums und/oder der Wandung eines zum Speicherraum führenden Kanals, einspritzbar ist, **dadurch gekennzeichnet, dass** der Speicherraum (4) in einer den Formhohlraum (3) bildenden Form (1) angeordnet ist und ein zusätzlicher Druckspeicher und/oder eine zusätzliche Druckquelle vorgesehen ist (sind), wobei der zusätzliche Druckspeicher und/oder die zusätzliche Druckquelle in der Form (1) angeordnet ist (sind) und wobei der zusätzliche Druckspeicher und/oder die zusätzliche Druckquelle dazu geeignet ist (sind), zusätzlichen Druck beim Einspritzen der Kunststoffschmelze in den Formhohlraum (3) auf die Kunststoffschmelze auszuüben, um den Formhohlraum (3), vorzugsweise vollständig, zu füllen.

2. Einrichtung nach Anspruch 1, **dadurch gekennzeichnet, dass** der zusätzliche Druckspeicher so ausgebildet ist und mit dem Speicherraum (4) in Verbindung steht, dass er, vorzugsweise ausschließlich, von der Hauptdruckquelle über die Kunststoffschmelze aufladbar bzw. vorspannbar ist.

3. Einrichtung nach Anspruch 1 oder 2, **dadurch gekennzeichnet, dass** die zusätzliche Druckquelle so ausgebildet ist, dass der Kunststoff im Speicherraum (4) und/oder im Kanal durch sie zusätzlich zur Hauptdruckquelle mit Druck beaufschlagbar ist.

4. Einrichtung nach einem der Ansprüche 1 bis 3, **dadurch gekennzeichnet, dass** der zusätzliche Druckspeicher und/oder die zusätzliche Druckquelle einen elastisch deformierbaren Festkörper aufweist (aufweisen), welcher im Speicherraum (4) und/oder in einem zum Speicherraum (4) führenden Kanal (6) und/oder anstelle zumindest eines Teils der Wandung (8) des Speicherraums (4) und/oder anstelle zumindest eines Teils der Wandung (7) des zum Speicherraum (4) führenden Kanals (6) vorgesehen ist.

5. Einrichtung nach Anspruch 4, **dadurch gekennzeichnet, dass** der zusätzliche Druckspeicher und/oder die zusätzliche Druckquelle so ausgebildet ist (sind), dass alleine aufgrund der elastischen Verformung des Festkörpers der zusätzliche Druck auf die Kunststoffschmelze ausübbar ist.

6. Einrichtung nach Anspruch 5, **dadurch gekennzeichnet, dass** der zusätzliche Druckspeicher und/oder die zusätzliche Druckquelle so ausgebildet ist (sind), dass in Kombination der elastischen Verformung des Festkörpers mit einer elastischen Deformation des Fluidspeichers (10) der zusätzliche Druck auf die Kunststoffschmelze ausübbar ist.

7. Einrichtung nach einem der Ansprüche 1 bis 6, **dadurch gekennzeichnet, dass** der zusätzliche Druckspeicher und/oder die zusätzliche Druckquelle ein mechanisches Federsystem, vorzugsweise einen federbelasteten Kolben (11) oder eine federbelastete Hülse (12) oder eine in sich federnde Hülse (12), aufweist (aufweisen).

8. Einrichtung nach einem der Ansprüche 1 bis 7, **dadurch gekennzeichnet, dass** der zusätzliche Druckspeicher und/oder die zusätzliche Druckquelle ein hydromechanisches oder pneumatisch mechanisches Federsystem, vorzugsweise einen fluidbelasteten Kolben (11) oder eine fluidbelastete dehnbare Hülse (12), aufweist (aufweisen).

9. Einrichtung nach einem der Ansprüche 1 bis 8, **dadurch gekennzeichnet, dass** der zusätzliche Druckspeicher und/oder die zusätzliche Druckquelle einen Fluidspeicher (10) gefüllt mit Gas oder Flüssigkeit aufweist (aufweisen).

10. Einrichtung nach einem der Ansprüche 1 bis 9, **dadurch gekennzeichnet, dass** die zusätzliche Druckquelle einen hydraulisch oder pneumatisch oder elektrisch oder piezoelektrisch betätigbaren Kolben (11) oder eine hydraulisch oder pneumatisch deformierbare Membran bzw. Wandung aufweist.

11. Einrichtung nach einem der Ansprüche 1 bis 10, **dadurch gekennzeichnet, dass** am Eingang des Speicherraums (4) oder in einem zum Speicherraum (4) führenden Kanal (6), vorzugsweise an dessen Eingang in die Form (1), ein weiteres Absperrelement (13) vorgesehen ist.

12. Einrichtung nach einem der Ansprüche 1 bis 11, **dadurch gekennzeichnet, dass** der Fließwiderstand im Verbindungsbereich von Speicherraum (4) und Formhohlraum (3) wesentlich geringer ist, als der in dem vor dem Speicherraum (4) liegenden Kanal (6).

13. Einrichtung nach einem der Ansprüche 1 bis 12, **dadurch gekennzeichnet, dass** die Länge des zum Speicherraum (4) führenden Kanals (6) mindestens zehnmal so groß ist wie der Abstand des Speicherraums (4) von dem Formhohlraum (3).

14. Einrichtung nach einem der Ansprüche 1 bis 13, **dadurch gekennzeichnet, dass** in der Form (1) mehrere Formhohlräume (3) angeordnet sind, denen mehrere Speicherräume (4) zugeordnet sind, wobei die, vorzugsweise als Nadelverschlüsse (9) ausgebildeten, Absperrungen der Speicherräume (4) eine gemeinsame Betätigungseinrichtung aufweisen.

15. Einrichtung nach einem der Ansprüche 1 bis 14, **dadurch gekennzeichnet, dass** sie eine Kontrolleinrichtung aufweist, die dazu vorgesehen ist, den absperrbaren Ausgang (5) in den Formhohlraum (3) in Abhängigkeit eines vorgebbaren Volumen-Strom-Profils gesteuert und/oder geregelt zu öffnen und/oder zu schließen.

## Claims

1. A device for expansion injection moulding, by means of which a polymer melt placed under pressure by a main pressure source can be injected from a storage chamber into a mould cavity by expansion of the polymer melt stored under pressure, the injection is optionally assisted by elastic deformation of the wall of the storage chamber and/or the wall of a runner leading to the storage chamber, the storage chamber having an exit which can be shut off, **characterized in that** the storage chamber (4) is arranged in a mould (1) which forms the mould cavity (3), and an additional pressure accumulator and/or an additional pressure source is (are) provided, wherein the additional pressure accumulator and/or the additional pressure source is (are) arranged in the mould (1) and wherein the additional pressure accumulator and/or the additional pressure source is (are) capable of exerting additional pressure on the polymer melt during the injection of the polymer melt into the mould cavity (3) in order to, preferably completely, fill the mould cavity (3).

2. The device according to claim 1, **characterized in that** the additional pressure accumulator is constructed and is connected to the storage chamber (4) such that it can be loaded or prepressurized, preferably exclusively, by the main pressure source via the polymer melt.

3. The device according to claim 1 or 2, **characterized in that** the additional pressure source is constructed such that a polymer in the storage chamber (4) and/or in the runner can be charged with pressure by the additional pressure source additionally to the main pressure source.

4. The device according to one of claims 1 to 3, **characterized in that** the additional pressure accumulator and/or the additional pressure source comprises (comprise) an elastically deformable solid body which is provided in the storage chamber (4) and/or the runner (6) leading to the storage chamber (4) and/or instead of at least a part of a wall (8) of the storage chamber (4) and/or instead of at least a part of a wall (7) of the runner (6) leading to the storage chamber (4).

5. The device according to claim 4, **characterized in that** the additional pressure accumulator and/or the additional pressure source is (are) constructed such that the additional pressure can be exerted on the polymer melt solely on the basis of the elastic deformation of the solid body.

6. The device according to claim 5, **characterized in that** the additional pressure accumulator and/or the additional pressure source is (are) constructed such that, in the combination of elastic deformation of the solid body with an elastic deformation of a fluid store (10), the additional pressure can be exerted on the polymer melt.

7. The device according to one of claims 1 to 6, **characterized in that** the additional pressure accumulator and/or the additional pressure source comprises (comprise) a mechanical spring system, preferably a spring-loaded plunger (11) or a spring-loaded sleeve (12) or a sleeve (12) which is springy in itself.

8. The device according to one of claims 1 to 7, **characterized in that** the additional pressure accumulator and/or the additional pressure source comprises (comprise) a hydromechanical or pneumatic-mechanical spring system, preferably a fluid-loaded plunger (11) or a fluid-loaded extensible sleeve (12).

9. The device according to one of claims 1 to 8, **characterized in that** the additional pressure accumulator and/or the additional pressure source comprises (comprise) a fluid store (10) filled with gas or liquid.

10. The device according to one of claims 1 to 9, **characterized in that** the additional pressure source comprises a hydraulically or pneumatically or electrically or piezoelectrically actuatable plunger (11) or a hydraulically or pneumatically deformable membrane or wall.

11. The device according to one of claims 1 to 10, **characterized in that** a further shut-off element (13) is provided at the entry of the storage chamber (4) or in the runner (6) leading to the storage chamber (4), preferably arranged at the entry of the runner (6) into the mould (1).

12. The device according to one of claims 1 to 11, **characterized in that** the flow resistance in the connecting region of the storage chamber (4) and the mould cavity (3) is considerably lower than that in the runner (6) lying upstream of the storage chamber (4).

13. The device according to one of claims 1 to 12, **characterized in that** the length of the runner (6) leading to the storage chamber (4) is at least ten times the distance of the storage chamber (4) from the mould cavity (3).

14. The device according to one of claims 1 to 13, **characterized in that** several mould cavities (3) are arranged in the mould (1), wherein several storage chambers (4) are assigned to these and the shut-off devices of the storage chambers (4) have a common actuating device, wherein the shut-off devices of the storage chambers are preferably constructed as needle shut-off devices (9).

15. The device according to one of claims 1 to 14, **characterized in that** the device comprises a control device which is intended to open and/or to close in a controlled and/or regulated manner the exit (5) which can be shut off into the mould cavity (3) as a function of a predeterminable volume/flow profile.

## Revendications

1. Dispositif de moulage par injection et expansion, avec lequel peut être injectée une masse de matière plastique fondue mise sous pression par une source de pression principale, à partir d'une chambre de stockage avec une sortie, pouvant être fermée, vers une cavité de moule, par l'expansion de la masse de matière plastique fondue accumulée sous pression, éventuellement avec le soutien d'une déformation élastique de la paroi de la chambre de stockage et/ou de la paroi d'un canal conduisant à la chambre de stockage, **caractérisé en ce que** la chambre de stockage (4) est disposée dans un moule (1) formant la cavité de moule (3), et **en ce qu'**accumulateur de pression supplémentaire et/ou une source de pression supplémentaire est(sont) prévu(s), l'accumulateur de pression supplémentaire et/ou la source de pression supplémentaire étant disposés(s) dans le moule (1), et l'accumulateur de pression supplémentaire et/ou la source de pression supplémentaire étant approprié(s) pour exercer sur la masse de matière plastique fondue une pression supplémentaire lors de l'injection de la masse de matière plastique fondue dans la cavité de moule (3) afin de remplir, de préférence totalement, la cavité de moule (3).

2. Dispositif selon la revendication 1, **caractérisé en ce que** l'accumulateur de pression supplémentaire est constitué, et est en liaison avec la chambre de stockage (4), de telle sorte qu'il peut être chargé ou respectivement précontraint, de préférence exclusivement, par la source de pression principale par le biais de la masse de matière plastique fondue.

3. Dispositif selon la revendication 1 ou 2, **caractérisé en ce que** la source de pression supplémentaire est constituée de telle façon que la matière plastique, dans la chambre de stockage (4) et/ou dans le canal, peut être soumise à la pression par cette source de pression supplémentaire en plus de la source de pression principale.

4. Dispositif selon une des revendications 1 à 3, **caractérisé en ce que** l'accumulateur de pression supplémentaire et/ou la source de pression supplémentaire présente(nt) un corps solide élastiquement déformable qui est prévu dans la chambre de stockage (4) et/ou dans un canal (6) conduisant à la chambre de stockage (4) et/ou à la place d'au moins une partie de la paroi (8) de la chambre de stockage (4) et/ou à la place d'au moins une partie de la paroi (7) du canal (6) conduisant à la chambre de stockage (4).

5. Dispositif selon la revendication 4, **caractérisé en ce que** l'accumulateur de pression supplémentaire et/ou la source de pression supplémentaire est (sont) constitué(s) de telle façon que la pression supplémentaire peut être exercée sur la masse de matière plastique fondue uniquement en raison de la déformation élastique du corps solide.

6. Dispositif selon la revendication 5, **caractérisé en ce que** l'accumulateur de pression supplémentaire et/ou la source de pression supplémentaire est (sont) constitué(s) de telle façon que la pression supplémentaire peut être exercée sur la masse de matière plastique fondue dans le cadre de la combinaison de la déformation élastique du corps solide avec une déformation élastique de l'accumulateur de fluide (10).

7. Dispositif selon une des revendications 1 à 6, **caractérisé en ce que** l'accumulateur de pression supplémentaire et/ou la source de pression supplémentaire présente(nt) un système à ressort mécanique, de préférence un piston (11) chargé par ressort ou une douille (12) chargée par ressort ou une douille élastique en elle-même (12).

8. Dispositif selon une des revendications 1 à 7, **caractérisé en ce que** l'accumulateur de pression supplémentaire et/ou la source de pression supplémentaire présente(nt) un système à ressort hydromécanique ou pneumatique-mécanique, de préférence un piston (11) chargé par fluide ou une douille (12) dilatable chargée par fluide.

9. Dispositif selon une des revendications 1 à 8, **caractérisé en ce que** l'accumulateur de pression supplémentaire et/ou la source de pression supplémentaire présente(nt) un accumulateur de fluide (10) rempli de gaz ou de liquide.

10. Dispositif selon une des revendications 1 à 9, **caractérisé en ce que** la source de pression supplémentaire présente un piston (11) pouvant être actionné de façon hydraulique ou pneumatique ou électrique ou piézoélectrique, ou présente une membrane ou respectivement une paroi déformable de façon hydraulique ou pneumatique.

11. Dispositif selon une des revendications 1 à 10, **caractérisé en ce que**, à l'entrée de la chambre de stockage (4) ou dans un canal (6) conduisant à la chambre de stockage (4), de préférence à son entrée dans le moule (1), il est prévu un autre élément de fermeture (13).

12. Dispositif selon une des revendications 1 à 11, **caractérisé en ce que** la résistance à l'écoulement dans la zone de raccordement de la chambre de stockage (4) et de la cavité de moule (3) est nettement plus faible que la résistance à l'écoulement dans le canal (6) situé en amont de la chambre de stockage (4).

13. Dispositif selon une des revendications 1 à 12, **caractérisé en ce que** la longueur du canal (6) conduisant à la chambre de stockage (4) est au moins dix fois grande que la distance séparant la chambre de stockage (4) et la cavité de moule (3).

14. Dispositif selon une des revendications 1 à 13, **caractérisé en ce que**, dans le moule (1), il est disposé plusieurs cavités de moule (3) auxquelles sont affectées plusieurs chambres de stockage (4), les fermetures, constituées de préférence sous forme de clapets à aiguille (9), des chambres de stockage (4) présentant un dispositif d'actionnement commun.

15. Dispositif selon une des revendications 1 à 14, **caractérisé en ce qu'**il présente un dispositif de contrôle qui est prévu pour ouvrir et/ou fermer, de façon commandée et/ou régulée, la sortie (5), pouvant être fermée, vers la cavité de moule (3) en fonction d'un profil de volume - de courant pouvant être prédéfini.
